# EUROPÄISCHE PATENTSCHRIFT

(11) **EP 1 967 419 B1**
(45) Veröffentlichungstag und Bekanntmachung des Hinweises auf die Patenterteilung: **07.10.2009**
(21) Anmeldenummer: 08151508.2
(22) Anmeldetag: 15.02.2008
(51) Int. Cl.: B60R 21/13

(54) **Überrollschutzsystem für Kraftfahrzeuge mit einem faltbaren Überrollbügel**
Rollover protection system for motor vehicles with one collapsible roll-bar
Système de protection contre les tonneaux pour véhicules automobiles doté d'un arceau de sécurité pliable

(30) Priorität: 05.03.2007 DE 102007011106
(43) Veröffentlichungstag der Anmeldung: 10.09.2008
(73) Patentinhaber: ISE Automotive GmbH, 51702 Bergneustadt (DE)
(72) Erfinder: Latussek, Holger, 51702, Bergneustadt (DE)
(74) Vertreter: Fuchs

(56) Entgegenhaltungen:
- EP-A- 1 798 116
- WO-A-20/06111623
- DE-A1-102006 028 664
- DE-C1- 10 143 934
- FR-A- 2 791 021

## Beschreibung

Die Erfindung betrifft ein Überrollschutzsystem für Kraftfahrzeuge, mit fahrzeugsitzbezogen angeordneten Überrollbügeln, die jeweils in einer fahrzeugfesten Halterung geführt aufgenommen ist, und im Normalzustand durch eine Haltevorrichtung in einer unteren, abgelegten Ruhelage haltbar sowie sensorgesteuert unter Lösen der Haltevorrichtung in eine aufgestellte, stützende Stellung bringbar sind, wobei jeder Überrollbügel zwei Bügelschenkel aufweist, die jeweils beabstandet in der Querachse des Fahrzeuges mit einem Ende in Lagern in der fahrzeugfesten Halterung drehbar angelenkt sind und mit ihrem freien Ende faltend gegenseitig verschiebbar und im aufgestellten Zustand gegenseitig verriegelt gekoppelt sind.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen. Sie sind beispielsweise bekannt aus der DE 10 2005 059 910 B3.

Mit einem derartigen System gelingt es, mit relativ geringem Aufwand ein sitzbezogenes Überrollschutzsystem mit einem Faltbügel zu schaffen, welches zusammengefaltet in der Halteposition verharrt und bei einem drohenden Überschlag aus der zusammengefalteten Halteposition in eine aufgefaltete verriegelte Position fährt, wobei sich die dabei zusammengefalteten Bügelschenkel aufstellen und in der aufgestellten Position gegenseitig verriegeln.
Dadurch ist es möglich, auch bei Fahrzeugen, die nur über ein geringes Platzangebot verfügen, ein wirksames Überrollschutzsystem mit einem Faltbügel zu integrieren, insbesondere in solchen Fahrzeugen, wo das Raumangebot im Bereich der Rückenlehne unterhalb des Faltbügels für andere Zwecke benötigt wird. Dies trifft beispielsweise dort zu, wo Platz für Durchlademöglichkeiten oder aber zum Ablegen eines Faltdaches vorhanden sein muss.
Ebenso wird dadurch die Möglichkeit geschaffen, zusätzlich festigkeitssteigernde Bauteile zu integrieren.

Der Vorschlag gemäß der DE 10 2005 059 910 B3 führt ferner zu einem kostengünstigen, wenige Bauteile aufweisenden Überrollschutzsystem, was entscheidend den Kostendruck, der in derAutomobilindustrie, insbesondere im Zulieferbereich, herrscht, berücksichtigt.

Je nach Form der Bügelschenkel kann der Faltvorgang unterschiedlich sein. Bei einer Schalenbauweise z.B. liegen die zusammengefalteten Bügelschenkel übereinander, bei flachen Bügelschenkeln eher nebeneinander, und bei rohrförmigen Bügelschenkeln können diese auch konzentrisch zueinander verfahren werden.

Bei der Konstruktion gemäß genannter Druckschrift ist der Faltbügel so ausgebildet, dass im aufgestellten Zustand die beiden Bügelschenkel zusammen mit dem Grundrahmen ein Dreieck bilden. Durch diese Dreieckkonfiguration und die drehbare Lagerung der Bügelschenkel wirken diese als Druckstäbe und können dementsprechend sehr hohe Druckkräfte in die Fahrzeugstruktur übertragen.
Auf der anderen Seite bedingt allerdings die Dreiecksgeometrie durch die ausgeprägte Spitze des aufgestellten Dreiecks ein schlechtes Verhalten des Überrollbügels bei einem Überschlag auf weichem Untergrund, d.h. der Überrollbügel hat ein schlechtes sogenanntes Eingrabverhalten. Zudem besteht insoweit ein gewisses Verletzungsrisiko für die Insassen.

Ferner ist der bekannte Faltbügel hinsichtlich der Wiedereinfahrsperre, d.h. der zugehörigen Verriegelung, so ausgebildet, dass diese nur im vollständig aufgestellten Zustand des Faltbügels, d.h. in seiner Endstellung, verriegelt. Eine Verriegelung in Zwischenstellungen ist nicht vorgesehen.

Vergleichbare Überrollschutzsysteme sind bekannt geworden aus DE 10 2006 028 664 A1, der DE 101 43 934 C1, der FR-A-2 791 021 und der WO 2006/111623 A. Ein Schutz gegen ein Eingraben im weichen Untergrund aber ist in keiner dieser Druckschriften thematisiert worden.

Der Erfindung liegt die Aufgabe zugrunde, einen Faltbügel der genannten Art dahingehend zu verbessern, dass er einen ausreichenden Schutz gegen Eingraben im weichen Untergrund bietet.

Die Lösung dieser Aufgabe gelingt bei dem Überrollschutzsystem für Kraftfahrzeuge der eingangs genannten Art mit fahrzeugsitzbezogen angeordneten Überrollbügeln, die jeweils in einer fahrzeugfesten Halterung geführt aufgenommen sind und im Normalzustand durch eine Haltevorrichtung in einer unteren, abgelegten Ruhelage haltbar sowie sensorgesteuert unter Lösen der Haltevorrichtung in eine aufgestellte, stützende Stellung bringbar sind, wobei jeder Überrollbügel zwei Bügelschenkel aufweist, die jeweils beabstandet in der Querachse des Fahrzeuges mit einem Ende in Lagern in der fahrzeugfesten Halterung drehbar angelenkt sind und mit ihrem freien Ende faltend gegenseitig verschiebbar und im aufgestellten Zustand gegenseitig verriegelt gekoppelt sind, gemäß der Erfindung dadurch, dass mindestens einer der beiden Bügelschenkel im Bereich des freien Endes eine ein Eingraben des Überrollbügels in einen weichen Untergrund erschwerende Abflachung aufweist.

Um ferner eine verriegelte Abstützung (Wiedereinfahrsperre) in Zwischenstellungen, d.h. auch dann, wenn die Bügelschenkel nicht in ihre Endstellung aufgestellt sind, zu erzielen, ist erfindungsgemäß die gegenseitige Verriegelung der beiden aufgestellten Bügelschenkel so getroffen, dass nicht nur in der Endstellung, sondern auch bei Zwischenstellungen eine Verriegelung aktivierbar ist.

Durch die erfindungsgemäße Maßnahme hinsichtlich der Ausbildung der Bügelschenkel wird einmal erreicht, dass die Spitze des dreieckförmig aufgestellten Faltbügels deutlich abgeflacht ist, so dass ein Eingraben des Faltbügels im weichen Untergrund deutlich erschwert wird. Zum anderen wird eine Wiedereinfahrsperre geschaffen, welche eine verriegelte Abstützung des Faltbügels auch dann ermöglicht, wenn die Bügelschenkel nicht in die Endstellung aufgestellt sind.

Weitere Ausgestaltungen und Weiterbildungen der Erfindung sind in Unteransprüchen gekennzeichnet und ergeben sich auch aus der Figurenbeschreibung.

Anhand von zwei in den Patentzeichnungen in verschiedenen Ansichten und Zuständen dargestellten vorteilhaften Ausführungsbeispielen wird die Erfindung näher erläutert.

Es zeigen:

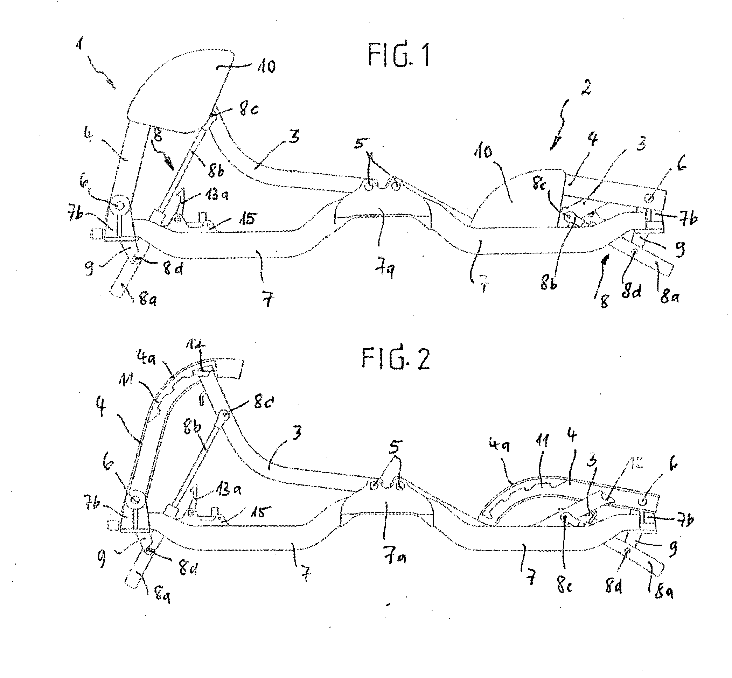

- Fig. 1: in einer Frontalansicht zwei in Fahrzeug-Querrichtung nebeneinander an einem Querträger angebrachte, nach einer ersten Ausführungsform erfindungsgemäß ausgebildete Faltbügel mit gebogenen, kopfseitig abgedeckten Bügelschenkeln, wobei der eine Faltbügel im aufgestellten Zustand und der andere Faltbügel in abgelegter Ruhelage dargestellt ist, mit einem Federantrieb zum Aufstellen des einen, innen liegenden Bügelschenkels und einer Zahnleiste im außen liegenden Bügelschenkel für eine Verriegelung mit einem kopfseitig am inneren Bügelschenkel angebrachten komplementären Verriegelungselement für eine Verriegelung der beiden Bügelschenkel auch in Zwischenstellungen,
- Fig. 2: ein Überrollbügelsystem entsprechend Fig. 1 ohne kopfseitige Abdeckung und einem geschnittenen außen liegenden Bügelschenkel zur Verdeutlichung der Verriegelung der beiden Bügelschenkel,
- Fig. 3: das Überrollbügelsystem nach Fig. 2 ohne Querträger zur Verdeutlichung des innen liegenden Bügelschenkels,
- Fig. 4: das Überrollbügelsystem nach Fig. 2 ohne Querträger in einer Rückansicht zur Verdeutlichung der Haltevorrichtung zum Niederhalten des Faltbügels in der abgelegten Ruhelage,
- Fig. 5: in einer Frontalansicht zwei in Fahrtrichtung nebeneinander an einem Querträger nach einer zweiten Ausführungsform erfindungsgemäß ausgebildete Faltbügel, wobei der eine Faltbügel im aufgestellten Zustand und der andere Faltbügel in abgelegter Ruhelage dargestellt ist, mit zwei im oberen Bereich bogenförmig abgeflachten Bügelschenkeln, und in diesem Bereich angebrachten Verriegelungselementen für die Wiedereinfahrsperre,
- Fig. 6: den vollständig aufgestellten verriegelten Faltbügel nach Fig. 5 in einer schematisierten Schnittdarstellung,
- Fig. 7: in einer der Fig. 6 entsprechenden Darstellung den in einer ersten Zwischenstellung aufgestellten und verriegelten Faltbügel, wobei die vollständige Aufstellung (Endstellung) gestrichelt eingezeichnet ist, und
- Fig. 8: in einer schematisierten Schnittdarstellung den vollständig aufgestellten Faltbügel nach Fig. 6 überlagert mit der Darstellung des Faltbügels in der abgelegten Ruhelage.

In den Figuren 1 bis 4 ist eine erste Ausführungsform der Erfindung dargestellt. Sie zeigen zwei sitzbezogen angebrachte Faltbügel 1, 2, wobei jeweils der Faltbügel 1 in der vollständig aufgestellten stützenden Position und der andere Faltbügel 2 in der unteren abgelegten Ruhelage dargestellt ist.
Jeder Faltbügel weist einen angetriebenen Innen-Bügelschenkel 3 und einen nicht angetriebenen Außen-Bügelschenkel 4 auf, von denen das eine Ende jeweils drehbar in Lagern 5 bzw. 6 in einem lagerbockähnlichen Abschnitt 7 a bzw. 7 b eines karosseriefesten Querträgers 7 der Rückwand des Fondraumes, angelenkt ist, und von denen die anderen Enden zueinander verschiebbar miteinander in Verbindung stehen.
Im dargestellten Beispiel ist das Überrollschutzsystem nach dem Konstruktionsprinzip mit einer Rückwand-Baueinheit ausgebildet, wie es beispielsweise in der DE 103 44 446 B3 beschrieben wird. Dieses Prinzip weist eine zwischen Fond und Gepäckraum angebrachte Rahmenkonstruktion auf, deren wesentlicher Bestandteil ein sich über die Innenbreite des Fahrzeuges erstreckender, karosseriefest angebrachter Profil-Querträger- hier Position 7 - ist, welcher die Überrollbügel aufnimmt und dessen Profil z.B. C-förmig sein kann. Aber auch andere karosseriefeste Anbringungen der Faltbügel sind denkbar. Als Antrieb zum Aufstellen des Innen-Bügelschenkels 3 ist ein Federantrieb 8 nach Art eines Feder-Aufstellelementes vorgesehen, welcher in bekannter Weise aus einem Antriebs-Zylinder 8 a, der eine Kompressionsfeder enthält und einem in dem Zylinder verschiebbar aufgenommenen Kolben mit Kolbenstange 8 b, welcher im Drehpunkt 8 c am angetriebenen Innen-Bügelschenkel 3 drehbeweglich angelenkt ist, besteht. DerAntriebs-Zylinder 8 a weist einen Gelenkstift 8 d auf, welcher im befestigenden Wirkeingriff mit einem im Lager 6 befestigten Lagerhaken 9 steht, wodurch das untere Ende des Antriebes drehgelenkig karosseriefest gehalten ist.

Aufbau und Wirkungsweise eines derartigen Federantriebes sind hinlänglich bekannt und brauchen daher hier nicht näher beschrieben zu werden.

Es können auch andere Federantriebe vorgesehen werden, z.B. Federantriebe, mit Schrauben-, Schenkel- oder Spiralfedern.

Auch kann prinzipiell ein pyrotechnischer Antrieb Anwendung finden.

Darüber hinaus können prinzipiell beide Bügelschenkel 3, 4 angetrieben sein.

Um das Eingrabeverhalten im weichen Untergrund zu verbessern, ist bei der ersten Ausführungsform der nicht angetriebene Außen-Bügelschenkel 4 im oberen Bereich 4 a abgerundet bzw. abgeflacht. Dieser obere Bereich 4 a ist, wie die Fig. 1 zeigt, zusätzlich mit einer flächigen Abdeckung 10 aus Kunststoffschaum, oder Metall (Blech) versehen.

Durch die Abrundung bzw. Abflachung des Außen-Bügelschenkels 4 ergibt sich im abgelegten Zustand des Faltbügels zunächst ein größerer Platzbedarf in vertikaler Richtung.
Um den angetriebenen Innen-Bügelschenkel 3, zwangsgeführt beim Aufstellen; verschiebbar in dem Außen-Bügelschenkel 4 aufzunehmen, ist dieser bei der ersten Ausführungsform ebenfalls gekrümmt, so das die beiden Bügelschenkel 3, 4 muschelartig kompakt zusammengefaltet werden können, wie jeweils der abgelegte Faltbügel 2 näher zeigt.

Damit die aufgestellten Bügelschenkel 3, 4 bei einem Überschlag nicht eingedrückt werden können, müssen sie in der aufgestellten Position verriegelt werden (Wiedereinfahrsperre). Die entsprechende Verriegelungseinrichtung ist im Fall der Erfindung aus Sicherheitsgründen so ausgebildet, dass eine Verriegelung auch in Zwischenstellungen unterhalb der Endstellung gewährleistet ist. Dazu ist im Fall der ersten Ausführungsform im Innern des Außen-Bügelschenkels 4 in seinem oberen, gebogenen Bereich 4 a eine entsprechend gebogene Zahnleiste 11 und an dem anderen Bügelschenkel 3 kopfseitig eine komplementäre Spitze 12, die vorzugsweise in Richtung der Aufstellbewegung federnd nachgiebig ist, vorgesehen.

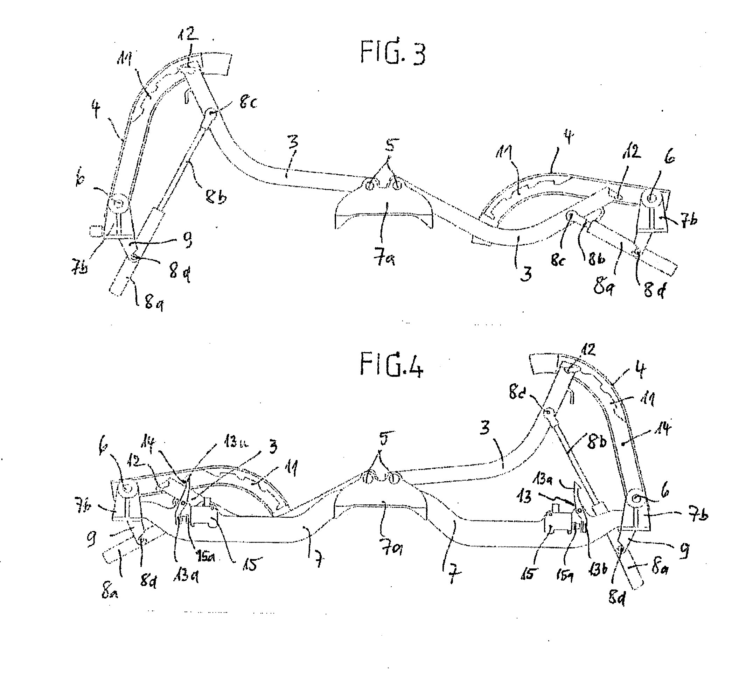

Im zusammengefalteten, d.h. abgelegten Ruhezustand des Faltbügels (hier Faltbügel 2) wird er durch eine lösbare Haltevorrichtung in dieser Position gehalten. Für diese Haltevorrichtung ist eine Reihe von Konstruktionen denkbar, wie sie insbesondere durch den einschlägigen Stand der Technik bekannt geworden sind. Im dargestellten Ausführungsbeispiel besteht sie, wie insbesondere die Fig. 4 zeigt, aus einer drehbeweglich am karosseriefesten Querträger angelenkten (vorgespannten) zweiarmigen Halteklinke 13 mit einem hakenförmigen Hebelarm 13 a, der in Wirkverbindung mit einem Halteglied, gebildet durch einen am nicht angetriebenen Bügelschenkel 4 befestigten Haltestift 14, steht.
Der andere Hebelarm 13 b der Halteklinke 13 steht in Wirkverbindung mit einem Auslösestift 15 a eines karosseriefest angebrachten Aktuators 15, der durch einen elektromagnetischen oder pyrotechnischen Aktuator gebildet sein kann.

Wird der Aktuator 15 sensorgesteuert bei einem drohenden Überschlag aktiviert, stößt er den Auslösestift 15 a aus, der seinerseits die Halteklinke 13 verschwenkt und dabei den Haltestift 14 - und damit auch den Außen-Bügelschenkel - freigibt, wodurch der Federantrieb 8 den Innen-Bügelschenkel 3 aufstellt, der dann den nicht angetriebenen Außen-Bügelschenkel 4 über die Zwangskopplung beider Bügelschenkel mit hochzieht, bis beide die Endstellung erreichen (hier Faltbügel 1) und sich über die Zahnleiste 11 und die kopfseitige komplementäre Spitze 12 in dieser Position verriegeln. Wird die Endstellung nicht erreicht, gewährleistet die Zahnleiste 11, dass bereits in Zwischenpositionen eine Verriegelung eintritt.

Es versteht sich, dass auch andere prinzipiell bekannte Verriegelungsmechanismen, wie z.B. eine Bolzenverriegelung, zum Einsatz kommen können.

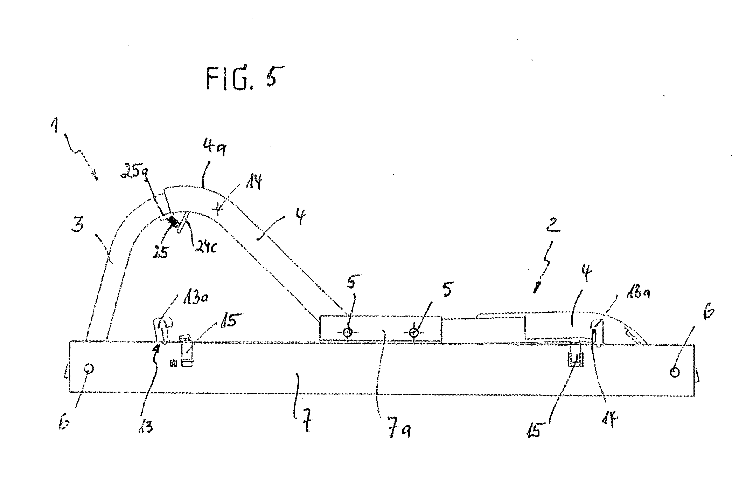

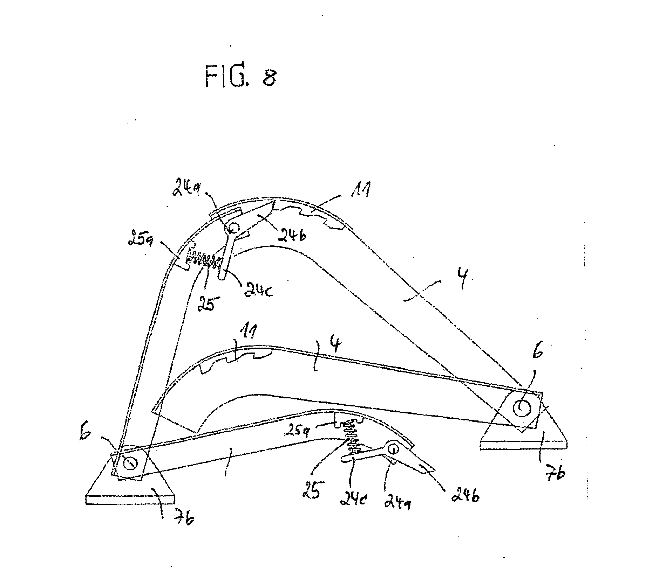

In den Figuren 5 - 8 ist eine zweite Ausführungsform des erfindungsgemäßen Faltbügels dargestellt. Sie weist ebenfalls einen Außen-Bügelschenkel 4 mit einem abgeflachten bzw. gebogenem oberen Bereich 4 a und einen Innen-Bügelschenkel 3 auf. Die einen Enden dieser Bügelschenkel sind, wie bei der ersten Ausführungsform, in den Lager-Drehpunkten 5 bzw. 6 in entsprechenden Lagerabschnitten 7 a bzw. 7 b des karosseriefesten Querträgers 7 angelenkt.

Die Bügelschenkel 3, 4 sind so geformt und kopfseitig angeordnet, dass die Aufstellbewegung durch gegenseitiges Abrollen erfolgt, d.h. Innen-und Außen-Bügelschenkel sind nicht über eine Kulisse zwangsgekoppelt.

Zum Niederhalten des abgelegten Faltbügels sind eine zweiarmige Halteklinke 13 und ein Aktuator 15 vorgesehen, die beide am Querträger 7 angebracht sind, wobei der eine (hakenförmige) Arm 13 a der Halteklinke im abgelegten Zustand des Faltbügels 2 (Fig. 5, rechter Teil) im lösbaren Wirkeingriff mit einem Haltestift 14, welcher am Außen-Bügelschenkel 4 angebracht ist, steht und der andere Arm in Wirkeingriff mit dem sensorgesteuert aktivierbaren Aktuator bringbar ist.

Die Verriegelung der aufgestellten Bügelschenkel 3, 4 erfolgt durch ein Zahnsegment im Innern des Außen-Bügelschenkels 4, welches durch eine gebogene Zahnleiste 11 oder durch entsprechende Fensterausschnitte im Bogenbereich gebildet sein kann, in Verbindung mit einer zweiarmigen Verriegelungs-Drehklinke 24, welche an der Spitze des Innen-Bügelschenkels 3 im Drehpunkt 24 a angelenkt ist. Die Drehklinke 24 weist einen Verriegelungs-Arm 24 b zum Wirkeingriff mit den Zähnen der Zahnleiste 11 und einen Betätigungs-Arm 24 c auf, an welchem sich mit einem Ende eine Sperr-Schraubenfeder 25 abstützt, die mit ihrem anderen Ende an einem Stützansatz 25 a im Innen-Bügelschenkel 3 anliegt.

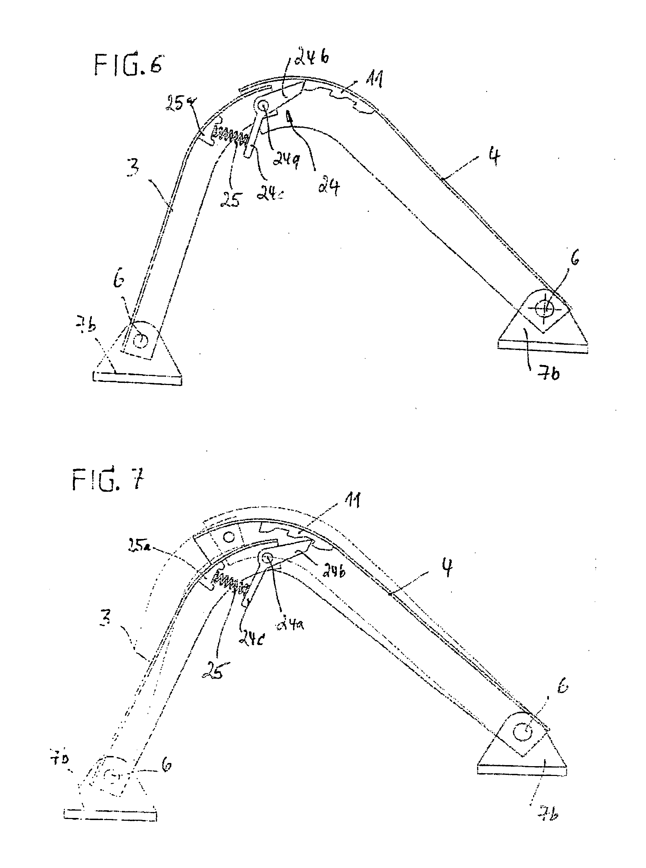

Der besseren Übersicht halber ist der Antrieb für das Aufstellen der Bügelschenkel 3, 4 nicht dargestellt. Bevorzugt findet ein Federantrieb Anwendung, jedoch ist auch ein pyrotechnischer Antrieb denkbar. Vorzugsweise wird, wie bei der anderen Ausführungsform, der Innen-Bügelschenkel 3 durch den Antrieb aktiv aufgestellt. Je nach der Federabstimmung des Federantriebes könnte dabei der "passive" Außen-Bügelschenkel 4 ebenfalls in die Endstellung gegen einen nicht dargestellten Anschlag katapultiert werden (Fig. 6). Eine entsprechend stabile Lagerung der Bügelschenkel sorgt dafür, dass sich die Spitzen der Bügelschenkel sicher miteinander verriegeln.

Denkbar wäre auch, dass beide Bügelschenkel aktiv angetrieben werden; hierbei würde zumindest der umschließende Außen-Bügelschenkel 4 die Endstellung entsprechend Fig. 6 erreichen und dort verriegeln.

Andererseits kann durch die Geometrie der Abrollbahn und die Federabstimmung des Federantriebes die Aufstellkinematik auch so ausgelegt werden, dass eine zweite, niedrigere Schutzstellung entsprechend Fig. 7, z.B. bei geschlossenem Dach des Cabriolets, entsteht, wenn beide Bügelschenkel nicht die volle Endstellung erreichen. Bei dem Faltbügel nach dem eingangs erwähnten System bleibt dieser, wenn einer der beiden Bügelschenkel blockiert ist, egal welcher, in einer nicht verriegelten Stellung.

Die Abflachung im oberen Bereich des Außen-Bügelschenkels 4 - und ggf. der entsprechende Bereich am Innen-Bügelschenkel 3 - kann gekrümmt, bogenförmig oder abgerundet sein.

### Bezugszeichenliste

- 1: aufgestellter Faltbügel
- 2: abgelegter Faltbügel
- 3: Innen-Bügelschenkel
- 4: Außen-Bügelschenkel
- 4 a: abgeflachter oberer Bereich
- 5: Lager des (inneren Bügelschenkels)
- 6: Lager (des äußeren Bügelschenkels)
- 7: karosseriefester Querträger
- 7 a, 7 b: lagerbockähnliche Abschnitte
- 8: Federantrieb
- 8 a: Antriebs-Zylinder
- 8 b: Kolbenstange
- 8 c: Drehpunkt
- 8 d: Gelenkstift
- 9: starrer Lagerhaken
- 10: Abdeckung
- 11: gebogene Zahnleiste
- 12: komplementäre Spitze
- 13: zweiarmige Halteklinke
- 13 a: hakenförmiger Hebelarm
- 13 b: anderer Hebelarm
- 14: Haltestift
- 15: Aktuator mit Auslösestift
- 15 a: Auslösestift
- 24: Verriegelungs-Drehklinke
- 24 a: Drehpunkt
- 24 b: Verriegelungs-Arm
- 24 c: Betätigungs-Arm
- 25: Sperr-Schraubenfeder
- 25 a: Stützansatz

## Patentansprüche

1. Überrollschutzsystem für Kraftfahrzeuge mit fahrzeugsitzbezogen angeordneten Überrollbügeln (1, 2), die jeweils in einer fahrzeugfesten Halterung (7) geführt aufgenommen sind und im Normalzustand durch eine Haltevorrichtung in einer unteren, abgelegten Ruhelage haltbar sowie sensorgesteuert unter Lösen der Haltevorrichtung (13, 14) in eine aufgestellte, stützende Stellung bringbar sind, wobei jeder Überrollbügel zwei Bügelschenkel (3, 4) aufweist, die jeweils beabstandet in der Querachse des Fahrzeuges mit einem Ende in Lagern (5, 6) in der fahrzeugfesten Halterung (7) drehbar angelenkt sind und mit ihrem freien Ende faltend gegenseitig verschiebbar und im aufgestellten Zustand gegenseitig verriegelt gekoppelt sind,
**dadurch gekennzeichnet, dass** mindestens einer der beiden Bügelschenkel (4) im Bereich (4 a) des freien Endes eine ein Eingraben des Überrollbügels in einen weichen Untergrund erschwerende Abflachung aufweist.

2. Überrollschutzsystem für Kraftfahrzeuge mit fahrzeugsitzbezogen angeordneten Überrollbügeln (1, 2), die jeweils in einer fahrzeugfesten Halterung (7) geführt aufgenommen sind und im Normalzustand durch eine Haltevorrichtung in einer unteren, abgelegten Ruhelage haltbar sowie sensorgesteuert unter Lösen der Haltevorrichtung (13, 14) in eine aufgestellte, stützende Stellung bringbar sind, wobei jeder Überrollbügel zwei Bügelschenkel (3, 4) aufweist, die jeweils beabstandet in der Querachse des Fahrzeuges mit einem Ende in Lagern (5, 6) in der fahrzeugfesten Halterung (7) drehbar angelenkt sind und mit ihrem freien Ende faltend gegenseitig verschiebbar und im aufgestellten Zustand gegenseitig verriegelt gekoppelt sind,
**dadurch gekennzeichnet, dass** die gegenseitige Verriegelung der beiden aufgestellten Bügelschenkel (3, 4) so getroffen ist, dass nicht nur in der Endstellung, sondern auch bei Zwischenstellungen eine Verriegelung aktivierbar ist.

3. Überrollschutzsystem nach Anspruch 1 oder 2 mit zwei Bügelschenkeln (3, 4), von denen der eine, der Außen-Bügelschenkel (4), den anderen Bügelschenkel, den Innen-Bügelschenkel (3), im gefalteten Zustand umfasst, **dadurch gekennzeichnet, dass** nur der Außen-Bügelschenkel (4) einen oberen, abgeflachten Bereich (4 a) aufweist.

4. Überrollschutzsystem nach Anspruch 1 oder 2 mit zwei Bügelschenkeln (3, 4), von denen der eine, der Außen-Bügelschenkel (4), den anderen Bügelschenkel, den Innen-Bügelschenkel (3), im gefalteten Zustand umfasst, **dadurch gekennzeichnet, dass** sowohl der Außen-Bügelschenkel (4) als auch der Innen-Bügelschenkel (3) einen oberen, abgeflachten Bereich (4 a) aufweisen.

5. Überrollschutzsystem nach einem der Ansprüche 1 bis 4,
**dadurch gekennzeichnet, dass** die Abflachung bogenförmig ausgebildet ist.

6. Überrollschutzsystem nach einem der Ansprüche 1 bis 4,
**dadurch gekennzeichnet, dass** die Abflachung als Abrundung ausgebildet ist.

7. Überrollschutzsystem nach einem der Ansprüche 1 bis 4,
**dadurch gekennzeichnet, dass** die Abflachung aus unterschiedlich gekrümmten Abschnitten besteht.

8. Überrollschutzsystem nach einem der Ansprüche 1 bis 7,
**dadurch gekennzeichnet, dass** die freien Enden der beiden Bügelschenkel (3, 4) miteinander zwangsgekopelt sind.

9. Überrollschutzsystem nach Anspruch 8, **dadurch gekennzeichnet, dass** das freie Ende (12) des einen Bügelschenkels (3) kulissensteinartig und das Innere des anderen Bügelschenkels (4) kulissenartig ausgebildet ist.

10. Überrollschutzsystem nach einem der Ansprüche 1 bis 9,
**dadurch gekennzeichnet, dass** als Antrieb ein Federantrieb (8) nach Art eines Feder-Aufstellelementes vorgesehen ist.

11. Überrollschutzsystem nach einem der Ansprüche 1 bis 9,
**dadurch gekennzeichnet, dass** als Antrieb eine Druck-Schraubenfeder vorgesehen ist.

12. Überrollschutzsystem nach einem der Ansprüche 1 bis 9,
**dadurch gekennzeichnet, dass** als Antrieb ein pyrotechnischer Antrieb vorgesehen ist.

13. Überrollschutzsystem nach einem der Ansprüche 2 bis 12,
**dadurch gekennzeichnet, dass** zur gegenseitigen Verriegelung der beiden Bügelschenkel (3, 4) ein Zahnsegment (11) mit mindestens zwei beabstandet ausgeformten Zähnen in Verbindung mit einem dazu komplementären Verriegelungselement (12; 24) für einen Wirkeingriff mit dem Zahnsegment (11; 12) vorgesehen ist.

14. Überrollschutzsystem nach einem der Ansprüche 1 bis 11,
**dadurch gekennzeichnet, dass** das Zahnsegment (11) im Innern des Außen-Bügelschenkels (4) und das komplementäre Verriegelungselement (12; 24) an der Spitze des Innen-Bügelschenkels (3) angebracht ist.

## Claims

1. Rollover protection system for motor vehicles with rollover bars (1, 2) arranged relative to a vehicle seat and which are accommodated in each case guided in a mounting (7) fixed to the vehicle and in the normal state can be held in a lower, stored rest position by a holding device and in sensor-controlled manner with release of the holding device (13, 14) can be brought into a raised, supporting position, wherein each rollover bar has two bar limbs (3, 4) which are hinged to be rotatable in each case spaced in the transverse axis of the vehicle with one end in bearings (5, 6) in the mounting (7) fixed to the vehicle and with their free end are coupled to be folding mutually displaceably and mutually locked in the raised state, **characterised in that** at least one of the two bar limbs (4) in the region (4a) of the free end has a flattening making more difficult the burying of the rollover bar into a soft substrate.

2. Rollover protection system for motor vehicles with rollover bars (1, 2) arranged relative to a vehicle seat which are accommodated in each case guided in a mounting (7) fixed to the vehicle and in the normal state can be held in a lower, stored rest position by a holding device and in sensor-controlled manner with release of the holding device (13, 14) can be brought into a raised, supporting position, wherein each rollover bar has two bar limbs (3, 4) which are hinged to be rotatable in each case spaced in the transverse axis of the vehicle with one end in bearings (5, 6) in the mounting (7) fixed to the vehicle and with their free end are coupled to be folding mutually displaceably and mutually locked in the raised state, **characterised in that** the mutual locking of the two raised bar limbs (3, 4) is effected so that locking can be activated not only in the end position, but also for intermediate positions.

3. Rollover protection system according to claim 1 or 2 with two bar limbs (3, 4), of which the one, the outer bar limb (4), encloses the other bar limb, the inner bar limb (3), in the folded state, **characterised in that** only the outer bar limb (4) has an upper, flattened region (4a).

4. Rollover protection system according to claim 1 or 2 with two bar limbs (3, 4), of which the one, the outer bar limb (4), encloses the other bar limb, the inner bar limb (3), in the folded state, **characterised in that** both the outer bar limb (4) and the inner bar limb (3) have an upper, flattened region (4a).

5. Rollover protection system according to one of claims 1 to 4, **characterised in that** the flattening is designed to be curved.

6. Rollover protection system according to one of claims 1 to 4, **characterised in that** the flattening is designed as a rounding.

7. Rollover protection system according to one of claims 1 to 4, **characterised in that** the flattening consists of sections of different curvature.

8. Rollover protection system according to one of claims 1 to 7, **characterised in that** the free ends of the two bar limbs (3, 4) are forcibly coupled to one another.

9. Rollover protection system according to claim 8, **characterised in that** the free end (12) of the one bar limb (3) is designed like a sliding block and the interior of the other bar limb (4) is designed like a crank.

10. Rollover protection system according to one of claims 1 to 9, **characterised in that** a spring drive (8) like a type of spring raising element is provided as the drive.

11. Rollover protection system according to one of claims 1 to 9, **characterised in that** a helical compression spring is provided as the drive.

12. Rollover protection system according to one of claims 1 to 9, **characterised in that** a pyrotechnic drive is provided as the drive.

13. Rollover protection system according to one of claims 2 to 12, **characterised in that** for mutual locking of the two bar limbs (3, 4), a toothed segment (11) with at least two teeth formed at a distance in conjunction with a locking element (12; 24) which is complementary thereto is provided for operative engagement with the toothed segment (11; 12).

14. Rollover protection system according to one of claims 1 to 11, **characterised in that** the toothed segment (11) in the interior of the outer bar limb (4) and the complementary locking element (12; 24) is attached to the tip of the inner bar limb (3).

## Revendications

1. Système de protection d'un véhicule en cas de retournement, comportant des arceaux de protection (1, 2) disposés en fonction des sièges du véhicule, lesquels sont logés de manière mobile dans un support (7) solidaire du véhicule et lesquels, dans une situation normale, peuvent être maintenus par un dispositif de fixation dans une position de repos escamotée inférieure et, sous l'effet d'une commande par capteur, peuvent être amenés dans une position de soutien déployée moyennant la désolidarisation du dispositif de fixation (13, 14), chaque arceau de protection comportant deux branches (3, 4) qui, respectivement à distance l'une de l'autre dans l'axe transversal du véhicule, sont articulées de manière rotative avec une extrémité dans des paliers (5, 6) dans le support (7) solidaire du véhicule, et avec leur extrémité libre peuvent être déplacées l'une vers l'autre par pliage et, dans la position déployée, peuvent être couplées réciproquement de manière bloquée, **caractérisé en ce qu'**au moins l'une des deux branches (4) de l'arceau de protection comporte, dans la zone (4a) de l'extrémité libre, un méplat rendant difficile la pénétration de l'arceau de protection dans un sol meuble.

2. Système de protection d'un véhicule en cas de retournement, comportant des arceaux de protection (1, 2) disposés en fonction des sièges du véhicule, lesquels sont logés de manière mobile dans un support (7) solidaire du véhicule et, dans une situation normale, peuvent être maintenus par un dispositif de fixation dans une position de repos escamotée inférieure et, sous l'effet d'une commande par capteur, peuvent être amenés dans une position de soutien déployée moyennant la désolidarisation du dispositif de fixation (13, 14), chaque arceau de protection comportant deux branches (3, 4) qui, respectivement à distance l'une de l'autre dans l'axe transversal du véhicule, sont articulées de manière rotative avec une extrémité dans des paliers (5, 6) dans le support (7) solidaire du véhicule, et avec leur extrémité libre peuvent être déplacées l'une vers l'autre par pliage et, dans la position déployée, peuvent être couplées réciproquement de manière bloquée, **caractérisé en ce que** le verrouillage réciproque des deux branches d'arceau (3, 4) déployées est choisi de telle sorte qu'un verrouillage peut être activé non seulement dans la position finale, mais aussi dans des positions intermédiaires.

3. Système de protection en cas de retournement selon la revendication 1 ou 2, comportant deux branches (3, 4) d'un arceau de protection, parmi lesquelles l'une, la branche extérieure (4) entoure à l'état plié l'autre branche de l'arceau, à savoir la branche intérieure (3), **caractérisé en ce que** seule la branche extérieure (4) de l'arceau de protection comporte une zone de méplat (4a) supérieure.

4. Système de protection en cas de retournement selon la revendication 1 ou 2, comportant deux branches (3, 4) d'un arceau de protection, parmi lesquelles la branche extérieure (4) entoure à l'état plié l'autre branche de l'arceau, à savoir la branche intérieure (3), **caractérisé en ce que** la branche extérieure (4) de l'arceau de protection, de même que la branche intérieure (3) de l'arceau de protection comportent une zone de méplat (4a) supérieure.

5. Système de protection en cas de retournement selon l'une quelconque des revendications 1 à 4,
**caractérisé en ce que** le méplat est réalisé en forme d'arc.

6. Système de protection en cas de retournement selon l'une quelconque des revendications 1 à 4,
**caractérisé en ce que** le méplat est réalisé sous la forme d'un arrondi.

7. Système de protection en cas de retournement selon l'une quelconque des revendications 1 à 4,
**caractérisé en ce que** le méplat est formé par des parties à courbure différente.

8. Système de protection en cas de retournement selon l'une quelconque des revendications 1 à 7,
**caractérisé en ce que** les extrémités libres des deux branches (3, 4) de l'arceau de protection sont couplées entre elles par force.

9. Système de protection en cas de retournement selon la revendication 8, **caractérisé en ce que** l'extrémité libre (12) de l'une des branches (3) de l'arceau de protection est réalisée en forme de coulisseau et l'autre branche, à savoir la branche intérieure (4) de l'arceau de protection, est réalisée en forme de coulisse.

10. Système de protection en cas de retournement selon l'une quelconque des revendications 1 à 9,
**caractérisé en ce que** pour former le mécanisme d'actionnement, il est prévu un mécanisme à ressort (8) du type d'un élément de déploiement à ressort.

11. Système de protection en cas de retournement selon l'une quelconque des revendications 1 à 9,
**caractérisé en ce que** pour former le mécanisme d'actionnement, il est prévu un ressort hélicoïdal de pression.

12. Système de protection en cas de retournement selon l'une quelconque des revendications 1 à 9,
**caractérisé en ce que** pour former le mécanisme d'actionnement, il est prévu un mécanisme pyrotechnique.

13. Système de protection en cas de retournement selon l'une quelconque des revendications 2 à 12,
**caractérisé en ce que,** pour le verrouillage réciproque des deux branches (3, 4) de l'arceau de protection, il est prévu un segment denté (11), avec au moins deux dents en saillie écartées l'une de l'autre, en association avec un élément de verrouillage (12 ; 24) complémentaire de celui-ci pour un engagement actif avec le segment denté (11 ; 12).

14. Système de protection en cas de retournement selon l'une quelconque des revendications 1 à 11,
**caractérisé en ce que** le segment denté (11) est agencé à l'intérieur de la branche extérieure (4) de l'arceau de protection et l'élément de verrouillage (12 ; 24) complémentaire est agencé dans la pointe de la branche intérieure (3) de l'arceau de protection.
